# EUROPÄISCHE PATENTSCHRIFT

(11) **EP 2 112 482 B1**
(45) Veröffentlichungstag und Bekanntmachung des Hinweises auf die Patenterteilung: **01.01.2014**
(21) Anmeldenummer: 09005394.3
(22) Anmeldetag: 15.04.2009
(51) Int. Cl.: H01Q 19/06, G01F 23/284, H01Q 13/02, H01Q 1/22, H01Q 19/08

(54) **Dielektrische Antenne**
Dielectric Antenna
Antenne diélectrique

(30) Priorität: 21.04.2008 DE 102008020036
(43) Veröffentlichungstag der Anmeldung: 28.10.2009
(73) Patentinhaber: KROHNE MESSTECHNIK GMBH & CO. KG, 47058 Duisburg (DE)
(72) Erfinder: Gerding, Michael, 44623 Herne (DE); Musch, Thomas, 44795 Bochum (DE); Pohl, Nils, 44801 Bochum (DE)
(74) Vertreter: Gesthuysen Patent- und Rechtsanwälte

(56) Entgegenhaltungen:
- WO-A-90/13927
- WO-A-2004/088793
- DE-A1- 10 206 110
- DE-A1-102005 022 493
- US-A- 4 218 683
- US-A1- 2002 126 061

## Beschreibung

Die Erfindung betrifft eine dielektrische Antenne mit einem dielektrischen Körper und einer elektrisch leitfähigen Hülle, wobei der dielektrische Körper an einem Speiseabschnitt mit elektromagnetischer Strahlung beaufschlagbar ist und die elektromagnetische Strahlung von dem dielektrischen Körper über einen linsenförmig geformten Abstrahlabschnitt abstrahlbar ist, die leitfähige Hülle den dielektrischen Körper vom Speiseabschnitt bis zum Abstrahlabschnitt im wesentlichen umgibt und im Bereich des Speiseabschnitts in der leitfähigen Hülle eine Speiseöffnung und im Bereich des Abstrahlabschnitts in der leitfähigen Hülle eine Abstrahlöffnung vorgesehen ist, wobei der dielektrische Körper im Bereich des Speiseabschnitts den Querschnitt der Abstrahlöffnung aufweist.

Dielektrischen Antennen sind aus unterschiedlichen Bereichen der Technik in ganz unterschiedlichen Bauformen bekannt. Gemeinsam ist dielektrischen Antennen jedoch, daß zur Führung und Abstrahlung elektromagnetischer Wellen dielektrische Materialien verwendet werden, insbesondere solche dielektrische Materialien, die besonders verlustarm sind. Es ist bekannt, als dielektrisches Material für den dielektrischen Körper z. B. Teflon oder Polyprophylen zu verwenden oder andere Dielektrika mit niedriger Permittivität.

In der industriellen Prozeßmeßtechnik werden dielektrischen Antennen beispielsweise häufig zur Füllstandsmessung verwendet. Bei solchen - aber auch bei anderen - Anwendungsgebieten ist es von besonderem Vorteil, wenn die verwendeten Antennen eine möglichst schmale Hauptabstrahlrichtung und gleichzeitig eine möglichst kompakte Bauform aufweisen. Diese Anforderungen widersprechen sich jedoch hinsichtlich der konstruktiven Maßnahmen, die üblicherweise zu ihrer technischen Umsetzung ergriffen werden müssen. Eine schmale Richtcharakteristik in Hauptabstrahlrichtung kann bekanntlich erst durch eine große Appartur - also Öffnungsfläche - des Abstrahlabschnitts erzielt werden. Damit die Appartur auch im Sinne einer schmalen Hauptabstrahlrichtung genutzt wird, muß die von dem Sendebereich der Linse abgestrahlte elektromagnetische Strahlung eine möglichst ebene Phasenfront aufweisen, wobei eine solch ebene Phasenfront mit zunehmender Länge der Antenne einfacher realisierbar ist, was der gewünschten kompakten Bauform ebenfalls entgegensteht.

Aus der WO 2004/088793 A1 ist eine sehr flach bauende Antenne bekannt, die beispielsweise in eine Oberfläche eingelassen werden kann. Die Antenne umfasst eine Linse, die im Bereich eines Wellenleiters halbkugelförmige Aussparungen aufweist, wobei mittig unterhalb dieses Hohlraums der Wellenleiter angeordnet ist. Die Antenne hat eine wenig ausgeprägte Richtcharakteristik, sie ist nämlich so ausgelegt, daß sie eine sehr breite, möglichst mit einem Raumwinkel von 180° in alle Richtungen gleichmäßige Abstrahlung aufweist, so daß ein möglichst großer Flächenbereich in der Umgebung der Antenne abgedeckt werden kann.

Die WO 90/13927 offenbart hingegen eine deutlich in Abstrahlrichtung hin erstreckte Antenne, die ein Horn und eine Linsenanordnung umfasst, wobei sowohl die Linsenanordnung als auch das Horn aus einem dielektrischen Material bestehen. Wellenanteile, die nicht direkt von der Quelle der elektromagnetischen Welle zu der Linsenanordnung gelangen, sind für das Abstrahlverhalten der Antenne praktisch verloren.

Aus der DE 10 2005 022 493 A1 ist eine Hornantenne mit einem dielektrischen Einsatz bekannt, wobei sich das Horn in bekannter Weise in die Abstrahlrichtung konisch aufweitet und die Berandung des Horns eine elektromagnetische Wellen reflektierende Beschaffenheit hat, beispielsweise aus Metall oder leitfähigem Kunststoff besteht. Der dielektrische Körper weist im Bereich des Speiseabschnitts aber nicht den Querschnitt der Abstrahlöffnung auf. Das gleiche gilt auch für die aus der DE 102 06 110 A1 bekannten Antennen mit einem dielektrischen Einsatz.

Bekannte dielektrische Antennen weisen neben der schwierigen gleichzeitigen Verwirklichung einer schmalen Hauptabstrahlrichtung bei gleichzeitig kompakter Bauform einen weiteren Nachteil auf, der mit der gegenseitigen Anordnung von elektromagnetischem Speiseelement - Hohlleiter - und dem dielektrischen Körper bzw. der aus dielektrischem Material geformten Linse zusammenhängt.

Bei den Antennenbauformen, bei denen das elektromagnetische Speiseelement und der dielektrische Körper in direktem Kontakt miteinander stehen, wird der dielektrische Körper zumindest von Teilen des elektromagnetischen Speiseelements, nämlich der leitfähigen Hülle, umschlossen. Wenn hier davon die Rede ist, daß die leitfähige Hülle den dielektrischen Körper vom Speiseabschnitt bis zum Abstrahlabschnitt "im wesentlichen" umgibt, dann ist damit gemeint, daß die der Begrenzung der elektromagnetischen Strahlung dienende leitfähige Hülle nicht zwingend genau bis an den Rand des Abstrahlabschnitts geführt sein muß, da es möglicherweise aufgrund der gewählten Geometrie der Hülle nicht möglich ist, daß im Speiseabschnitt beaufschlagte elektromagnetische Strahlung diesen Endbereich des dielektrischen Körpers erreicht. Auch ist damit gemeint, daß es sich bei der Hülle nicht zwingend um eine nach dem optischen Verständnis "dichte" Hülle handeln muß, denn je nach gewählter elektromagnetischer Strahlung wird der gewünschte Effekt der Reflexion auch von einem hinreichend dichten, leitfähigen Gitter erfüllt.

Bei anderen Bauformen sind ein elektromagnetisches Speiseelement - Hohlleiter - und der dielektrische Körper bzw. die aus dielektrischem Material bestehende Linse beabstandet voneinander angeordnet, so daß sich ein Zwischenraum zwischen dem Speiseelement und dem dielektrischen Körper ergibt.

Beide zuvor genannten Varianten haben den Nachteil, daß sich eine auch beispielsweise für Hygiene-Anwendungen geeignete Bauform nur schlecht realisieren läßt. Abgesehen von der konstruktiv ohnehin sehr anspruchsvollen Realisierung einer Antenne mit einem von der leitfähigen Hülle zumindest teilweise umfaßten dielektrischen Körper hat diese Bauform zusätzlich den Nachteil, daß die leitende Hülle und der dielektrische Körper gemeinsam bis zu einem weit vorgelagerten Bereich der Antenne verlaufen und vergleichsweise exponiert und daher schmutzgefährdet sind. Bei der Antennenkonstruktion mit Zwischenräumen zwischen dem elektromagnetischen Speiseelement und dem dielektrischen Körper besteht stets die Gefahr der Verschmutzung jener Antennenflächen, die dem Zwischenraum zugewandt sind; ferner können Über- und Unterdruckanwendungen aufgrund des vorhandenen Zwischenraums problematisch sein.

Es hat sich ferner bei solchen dielektrischen Antennen mit einer konisch sich in Abstrahlrichtung hin öffnenden Form und mit einer konisch geformten leitfähigen Hülle als nacheilig herausgestellt, daß der Fertigungsaufwand für solch winklige - aber nicht rechtwinklige - Konstruktionen vergleichsweise hoch ist, so daß ein Interesse daran besteht, einfachere und preiswerter herzustellende Antennenbauformen zu finden, zumindest vergleichbare Abstrahleigenschaften aufweisen, wie aus dem Stand der Technik bekannte Antennen.

Es ist daher die Aufgabe der vorliegenden Erfindung, die aufgezeigten Nachteile bei bekannten dielektrischen Antennen - zumindest teilweise - zu vermeiden.

Die aufgezeigte Aufgabe ist erfindungsgemäß zunächst und im wesentlichen bei der in Rede stehenden dielektrischen Antenne dadurch gelöst, daß der dielektrische Körper in einem Randabschnitt benachbart zur leitfähigen Hülle, nämlich im Randabschnitt zur Seitenwand der leitfähigen Hülle, aus einem Dielektrikum besteht, das eine geringere Permittivität aufweist als die anderen Abschnitte des dielektrischen Körpers, nämlich eine geringere Permittivität aufweist als der Kernabschnitt und der Abstrahlabschnitt des dielektrischen Körpers.

Durch diese Ausgestaltung wird erreicht, daß an der Grenzschicht zwischen dem Randabschnitt und dem Kernabschnitt des dielektrischen Körpers eine interne Brechung der elektromagnetischen Strahlung in Richtung auf den Abstrahlbereich erfolgt.

Durch diese Maßnahme gelangt elektromagnetische Strahlung auf direktem Wege - ohne vorherige Reflexion - in den Abstrahlbereich, die zuvor, ohne den niedrig-permittiven Randbereich, auf die Seitenwand der leitfähigen Hülle getroffen ist. Ferner trifft die auf den Randbereich des Abstrahlabschnitts des dielektrischen Körpers treffende elektromagnetische Strahlung dort unter einem flacheren Winkel auf, als dies bei dielektrischen Körpern der Fall ist, die aus einem einheitlichen Dielektrikum bestehen. Dadurch ist im Vergleich nur eine deutlich geringere Korrektur des Strahlengangs durch den linsenförmigen Abstrahlabschnitt notwendig, so daß die Linsendicke insgesamt erheblich geringer ausfallen kann. Darüber hinaus kann die Antenne in Hauptabstrahlrichtung merklich kürzer gebaut werden, um die gleiche Abstrahlöffnung auszuleuchten und die gleiche Richtcharakteristik zu erzielen, wie vergleichsweise längere konventionelle dielektrische Antennen. Das Ergebnis dieser Maßnahme sind also kurzbauende dielektrische Antennen mit einer sehr flachen Linsengeometrie.

Dadurch, daß der dielektrische Körper im Bereich des Speiseabschnitts im wesentlichen den Querschnitt der Abstrahlrichtung aufweist, wird erreicht, daß der dielektrische Körper über seine gesamte Erstreckung in Hauptstrahlrichtung gesehen keiner nennenswerten Querschnittsänderung mehr unterworfen ist, um letztlich im Abstrahlabschnitt die Abstrahlöffnung ausfüllen zu können. Insbesondere ist es nicht notwendig, beispielsweise einen konischen dielektrischen Körper und eine an diesen konischen dielektrischen Körper angepaßte konische leitfähige Hülle herzustellen. Die erfindungsgemäß ausgestaltete dielektrische Antenne ist mit einem erheblich geringeren Aufwand herstellbar als bekannte Konstruktionen. Zwar ist etwas mehr dielektrisches Material zur Fertigung des dielektrischen Körpers notwendig, jedoch überwiegen die Vorteile bei weitem.

Nach einer besonders bevorzugten Ausgestaltung der erfindungsgemäßen dielektrischen Antenne ist die leitfähige Hülle topfartig ausgestaltet, weist also eine zylindrische Seitenwand und einen die Speiseöffnung aufweisenden Boden im Speiseabschnitt der Antenne auf, wobei die Abstrahlöffnung im wesentlichen den Querschnitt der zylindrischen Seitenwand - wiederum senkrecht zur Hauptabstrahlrichtung gesehen - aufweist.

Solche Hohlkörper mit zylindrischer Seitenwandung sind besonders einfach herstellbar, egal ob durch zerspanende (Drehen, Fräsen) oder nichtzerspanende (Tiefziehen) Fertigungsverfahren. Die Speiseöffnung im Boden der leitfähigen Hülle dient der Einleitung von elektromagnetischer Strahlung in den dielektrischen Körper bzw. in den Innenraum der leitfähigen Hülle. Zylindrisch ist hier nicht einschränkend im Sinne von kreiszylindrisch zu verstehen, sondern es sind darunter jegliche für die Führung elektromagnetischer Strahlung geeignete Geometrien vorstellbar, solange die Querschnittgeometrie der leitfähigen Hülle und des dielektrischen Körpers in Abstrahlrichtung gesehen im wesentlichen unverändert bleibt.

Bevorzugt wird der Speiseabschnitt zusätzlich durch einen Hohlleiter gebildet, der von außen an die leitfähige Hülle und um die Speiseöffnung angesetzt ist oder der in die leitfähige Hülle in die Speiseöffnung eingesetzt ist und dann vorzugsweise in den dielektrischen Körper hineinragt. In beiden Fällen lassen sich auf einfache Art und Weise Verbindungen zu einer elektromagnetischen Speisequelle herstellen.

Der linseförmige Abstrahlabschnitt wird bei den erfindungsgemäßen dielektrischen Antennen grundsätzlich so ausgeschaltet, daß von dem Abstrahlbereich elektromagnetischen Wellen mit einer möglichst ebenen Phasenfront abgegeben werden. Dabei ist zu berücksichtigen, daß zur Erzielung einer ebenen Phasenfront die Laufzeiten der unterschiedlichen Anteile der elektromagnetischen Strahlung von dem Speiseabschnitt bis zu den verschiedenen Orten der Linseoberfläche des Abstrahlabschnitts in etwa gleich sein müssen und daß die am Übergang von der Oberfläche des dielektrischen Körpers im Abstrahlabschnitt zum Außenraum erfolgende Brechung der elektromagnetischen Strahlung aufgrund des Dielektrizitätssprungs zwischen dielektrischem Körper und dem Außenraum in Richtung der Hauptabstrahlrichtung erfolgen muß, damit eine gute Richtcharakteristik resultiert.

Aufgrund des Sprungs der Dielektrizität im Übergangsbereich von dem dielektrischen Körper in den Außenraum wird auch ein Teil der elektromagnetischen Strahlung in die Antenne, d. h. in den dielektrischen Körper zurückreflektiert. Die erfindungsgemäße Ausgestaltung der dielektrischen Antenne hat diesbezüglich den Vorteil, daß nur ein geringer Teil der zurückreflektierten elektromagnetischen Strahlung in den Speiseabschnitt bzw. in die Speiseöffnung des Speiseabschnitts fällt und dort zu ungewünschten Störeffekten führt; dies ist bei konisch geformten Antennengeometrien ein weitaus größeres Problem.

Eine weitere besonders bevorzugte Ausgestaltung der erfindungsgemäßen dielektrischen Antenne zeichnet sich dadurch aus, daß der dielektrische Körper im Speiseabschnitt eine speiseseitige Absorberschicht zur Absorption reflektierter elektromagnetischer Strahlungsanteile aufweist. In der speiseseitigen Absorberschicht ist im Bereich der Speiseöffnung eine Aussparung vorgesehen, so daß die elektromagnetische Strahlung, mit der der dielektrische Körper beaufschlagt wird, beim Eintreten in den dielektrischen Körper nicht von der Absorberschicht behindert wird. Die Absorberschicht hat die Eigenschaft, elektromagnetische Strahlung zu absorbieren, letztlich also in Wärme umzuwandeln.

Damit beim Eintreten der elektromagnetischen Strahlung vom Speiseabschnitt in den dielektrischen Körper keine Verluste auftreten, ist die Absorberschicht insbesondere benachbart zur leitfähigen Hülle und insbesondere nicht im primär stark befeldeten Bereich des dielektrischen Körpers vorgesehen. Mit "primär stark befeldeten Bereich" ist hier jeder Bereich des dielektrischen Körpers gemeint, der von der elektromagnetischen Strahlung direkt - also ohne Berücksichtigung von Reflexionen - durchstrahlt wird. So ist sichergestellt, daß in dem dielektrischen Körper nur - z. B. von der leitfähigen Hülle - reflektierte elektromagnetische Strahlung auf die Absorberschicht fällt und nicht weiter reflektiert werden kann. Reflexionen sind häufig unerwünscht, weil sie zu einem Verrauschen des Sendesignals und zu Echos in dem auszuwertenden Sendesignal führen und die Auswertung der von der dielektrischen Antenne abgestrahlten und empfangenen elektromagnetischen Strahlung erschweren.

Bei einer weiteren bevorzugten Ausgestaltung der Erfindung weist der dielektrischen Körper in einem Randabschnitt benachbart zur leitfähigen Hülle eine seitliche Absorberschicht auf, die insbesondere im Randabschnitt zur Seitenwand der leitfähigen Hülle vorgesehen ist und insbesondere nicht im primär stark befeldeten Bereich des dielektrischen Körpers vorgesehen ist. Durch diese seitliche Absorberschicht ist es möglich, auch in Richtung auf die Seitenwand der leitfähigen Hülle abgestrahlte reflektierte und reflektiert werdende elektromagnetische Strahlung zu absorbieren und so weitere Reflexionen zu verhindern. Dabei ist es von besonderem Vorteil, wenn die seitliche Absorberschicht benachbart zu der speiseseitigen Absorberschicht im Speiseabschnitt des dielektrischen Körpers angeordnet ist. Dies hat insbesondere auch Vorteile hinsichtlich der Fertigung einer solchen Absorberschicht.

Die Bedingung, daß auch die seitliche Absorberschicht nicht im primär stark befeldeten Bereich des dielektrischen Körpers vorgesehen ist, führt zu einer in Hauptabstrahlrichtung gesehen konischen Aufweitung der seitlichen Absorberschicht und zu einer damit korrespondierenden konischen Zuspitzung des dielektrischen Körpers bzw. des Randabschnitts des dielektrischen Körpers, der aus einem Dielektrikum mit einer geringeren Permittivität besteht.

Erfindungsgemäß ist weiter vorgesehen, daß die speiseseitige Absorberschicht oder die seitliche Absorberschicht aus wenigstens einer elektrisch und/oder magnetisch aktiven Substanz besteht bzw. bestehen oder eine solche Substanz beinhaltet bzw. beinhalten. Mit "elektrisch bzw. magnetisch aktiv" ist gemeint, daß eine hinreichende Leitfähigkeit vorhanden ist, um die gewünschte Absorption der reflektierten elektromagnetischen Strahlung zu erzielen. Bevorzugt besteht eine solche Absorberschicht aus einem Kunststoff mit eingelagertem Leitruß - so wie er beispielsweise in Keramiken zur Erhöhung der Leitfähigkeit verwendet wird - und/oder mit eingelagertem Kohlenstoff und/oder mit eingelagerten leitfähigen Mikrofasern oder mit anderen eingelagerten inherent leitfähigen Stoffen.

Bei einer weiteren bevorzugten Ausgestaltung der Erfindung weist der linsenförmig geformte Abstrahlabschnitt eine dielektrische Anpassungsschicht zur Vermeidung von Reflexionen auf. Die Dicke der Anpassungsschicht beträgt ca. ¼ der Wellenlänge bezogen auf die Mittenfrequenz des ausgesendeten Spektrums der elektromagnetischen Strahlung. Die Permittivität des für die Anpassungsschicht verwendeten Materials richtet sich nach der Permittivität des dielektrischen Körpers - bzw. der Permittivität des Kernabschnitts und des Abstrahlabschnitts des dielektrischen Körpers - und nach der Permittivität des die Antenne umgebenden Außenraums, der bei üblichen Anwendungen aus Luft besteht. Im Idealfall ist die Permittivität des Materials der Anpassungsschicht gleich der Quadratwurzel aus dem Produkt der beiden zuvor genannten Permittivitäten. Die so ausgelegte Anpassungsschicht bewirkt eine deutliche Verringerung der Störreflexionen im Bereich des Übergangs zwischen Antenne und Außenraum und der damit verbundenen Mehrfachreflektionen innerhalb des dielektrischen Körpers.

Bei der erfindungsgemäßen Antennengeometrie - insbesondere bei der Verwendung von der speiseseitigen und/oder der seitlichen Absorberschicht können Reflexionen innerhalb des dielektrischen Körpers bzw. deren Auswirkungen weiter verringert werden, indem der linseförmige Abstrahlabschnitt so ausgeformt ist, daß die in den dielektrischen Körper zurückreflektierte elektromagnetische Strahlung vorzugsweise auf die speiseseitige Absorberschicht und/oder die seitliche Absorberschicht reflektiert wird oder aber auch in den flachen, nicht ausgekleideten, speiseseitigen Abschnitt der dielektrischen Antenne, der die Speiseöffnung umgibt.

Im einzelnen gibt es noch eine Vielzahl von Möglichkeiten, die erfindungsgemäße dielektrische Antenne auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische Schnittdarstellung einer nicht erfindungsgemäßen dielektrischen Antenne,
- Fig. 2: eine schematische Darstellung einer erfindungsgemäßen dielektrischen Antenne mit einem dielektrischen Körper, der in einem Randabschnitt Material geringerer Permittivität aufweist,
- Fig. 3: eine weitere schematische Schnittdarstellung einer erfindungsgemäßen dielektrischen Antenne mit einer speiseseitigen Absorberschicht,
- Fig. 4: die schematische Darstellung einer erfindungsgemäßen dielektrischen Antenne gemäß Fig. 3 mit ausgewählten Strahlengängen reflektierter elektromagnetischer Strahlung,
- Fig. 5: eine schematische Schnittdarstellung einer erfindungsgemäßen dielektrischen mit einer seitlichen Absorberschicht und einer dielektrischen Anpassungsschicht auf der dielektrischen Linse,
- Fig. 6: eine schematische Schnittdarstellung einer weiteren erfindungsgemäßen dielektrischen Antenne mit einem realisierten Hygieneanschluß,
- Fig. 7: eine schematische Schnittdarstellung einer nicht erfindungsgemäßen dielektrischen Antenne mit einer Fixierungseinrichtung für den dielektrischen Körper,
- Fig. 8: eine schematische Schnittdarstellung durch eine erfindungsgemäße dielektrische Antenne mit gestuftem Übergang zwischen Absorber und dem Randabschnitt des dielektrischen Körpers mit geringerer Permittivität,
- Fig. 9a, 9b: eine schematische Schnittdarstellung durch den dielektrischen Körper senkrecht zur Hauptabstrahlrichtung mit kontinuierlichen Permittivitätsprofilen,
- Fig. 10: schematische Querschnittsdarstellung durch eine nicht erfindungsgemäße dielektrische Antenne mit einem seitlichen mechanischen Kompensationsbereich,
- Fig. 11: schematische Schnittdarstellung durch eine nicht erfindungsgemäße dielektrische Antenne mit einem speiseseitigen mechanischen Kompensationsbereich und
- Fig. 12: eine schematische Schnittdarstellung durch eine nicht erfindungsgemäße dielektrische Antenne mit Abtropfspitze.

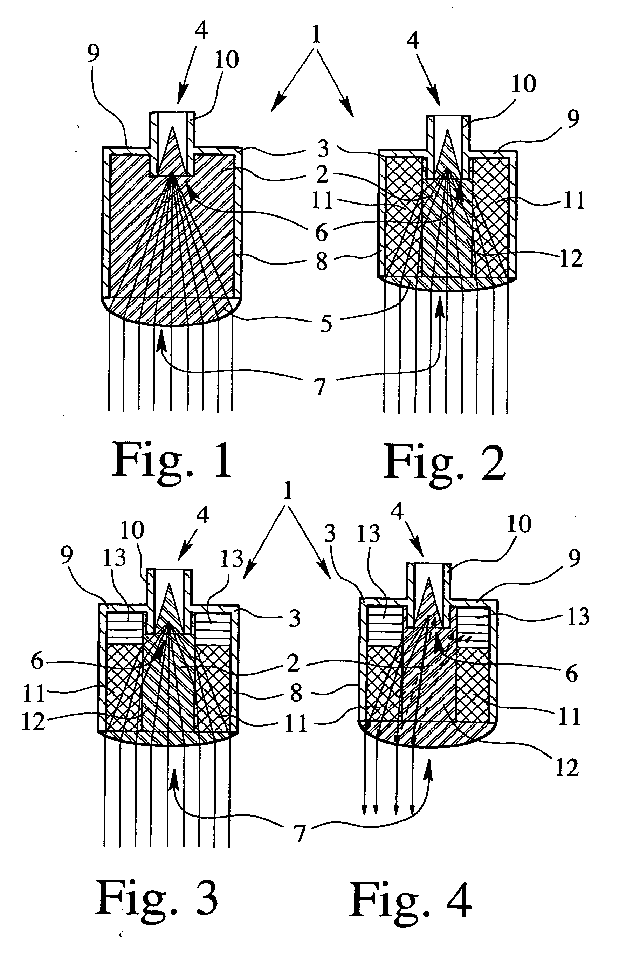

Fig. 1 zeigt ein erstes, sehr einfaches Ausführungsbeispiel einer nicht erfindungsgemäßen dielektrischen Antenne 1 mit einem dielektrischen Körper 2 und einer elektrisch leitfähigen Hülle, wobei der dielektrische Körper 2 an einem Speiseabschnitt 4 mit elektromagnetischer Strahlung beaufschlagbar ist und die elektromagnetische Strahlung - zumindest teilweise - von dem dielektrischen Körper 2 über einen linsenförmig geformten Abstrahlabschnitt 5 abstrahlbar ist. Die leitfähige Hülle 3 umgibt den dielektrischen Körper 2 im Speiseabschnitt 4 bis zum Abstrahlabschnitt 5. Damit der dielektrische Körper 2 von elektromagnetischer Strahlung beaufschlagbar ist, ist in der leitfähigen Hülle 3 im Speiseabschnitt 4 eine Speiseöffnung 6 vorgesehen und im Bereich des Abstrahlabschnitts ist in der leitfähigen Hülle eine Abstrahlöffnung 7 vorgesehen.

Die in Fig. 1 dargestellte dielektrische Antenne zeichnet sich - wie alle in den anderen Figuren dargestellten dielektrischen Antennen - dadurch aus, daß der dielektrische Körper 2 im Bereich des Speiseabschnitts 4 im wesentlichen den Querschnitt der Abstrahlöffnung 7 aufweist. Derartige Antennen sind sehr einfach und kostengünstig zu fertigen, da winklige - gemeint sind nicht rechtwinklige - Konturen des dielektrischen Körpers 2 oder der elektrisch leitfähigen Hülle 3 hier nicht realisiert werden müssen. Auch hinsichtlich der an der Grenze zwischen dem linsenförmige geformten Abstrahlabschnitt 5 und der Umgebung in den dielektrischen Körper zurückreflektierten elektromagnetischen Strahlung hat die dargstellte Geometrie gegenüber einer trichterförmigen Geometrie einige Vorteile, da die zurückreflektierte Störstrahlung nur zu einem geringen Teil in die Speiseöffnung 6 zurückfällt, ansonsten aber in den Bodenbereich der leitfähigen Hülle 3 im Bereich des Speiseabschnittes 4 fällt.

Bei allen in den Fig. 1 bis 8 und 10 bis 12 dargestellten dielektrischen Antennen ist die leitfähige Hülle 3 topfartig ausgestaltet, weist nämlich eine zylindrische Seitenwand 8 und einen die Speiseöffnung 6 aufweisenden Boden im Speiseabschnitt 4 der Antenne 1 auf. In den dargestellten Ausführungsbeispielen bildet die Seitenwand 3 einen Kreiszylinder, eine Geometrie die einfach herzustellen ist und hinsichtlich der Führung elektromagnetischer Wellen Vorteile hat. Die Abstrahlöffnung 7 weist dabei im wesentlichen den Querschnitt der zylindrischen Seitenwand 8 - senkrecht zur Hauptabstrahlrichtung gesehen - auf.

In allen dargestellten Ausführungsbeispielen umfaßt der Speiseabschnitt 4 einen Hohlleiter 10, der in die leitfähige Hülle 3 in die Speiseöffnung 6 eingesetzt ist und in den dielektrischen Körper 2 hineinragt, im vorliegenden Fall also auch in das Innere der durch die leitfähige Hülle 3 gebildeten Außenkontur. Der Hohlleiter 10 ist in die leitfähige Hülle 3 mittels einer Verschraubung eingesetzt, der Hohlleiter 10 weist also ein nicht näher dargestelltes Außengewinde auf, was insbesondere auch vorteilhaft ist, um den dielektrischen Körper 2 in der elektrisch leitfähigen Hülle 3 zu befestigen. Dazu weist der dielektrische Körper 2 ein entsprechendes Innengewinde auf.

Unter anderem in den Fig. 2 bis 6 sind Ausführungsbeispiele dargestellt, bei denen der dielektrische Körper 2 - zumindest teilweise - in einem Randabschnitt 11 benachbart zur leitfähigen Hülle 3 aus einem Dielektrikum besteht, wobei der Randabschnitt 11 zur Seitenwand 8 der leitfähigen Hülle 3 benachbart ist. Der Randabschnitt 11 besteht aus einem Dielektrikum, das geringere Permittivität aufweist als die anderen Abschnitte des dielektrischen Körpers 2, insbesondere nämlich eine geringere Permittivität aufweist als der Kemabschnitt 12 und der Abstrahlabschnitt 5 des dielektrischen Körpers 2. Durch diese Ausgestaltung wird erreicht, daß die elektromagnetische Strahlung, die den Abstrahlabschnitt 5 von dem Abstrahlabschnitt nicht in direkter Weise erreichen würde, den Abstrahlabschnitt nunmehr auch auf direktem Wege erreicht. Damit die elektromagnetische Strahlung an der Grenzfläche zwischen dem Kernabschnitt 12 und dem Randabschnitt 11 des dielektrischen Körpers 2 in Richtung auf den Abstrahlabschnitt 5 gebrochen wird, ist es erforderlich, daß die Permittivität des Randabschnitts 11 geringer ist als die des Kernabschnitts 12 des dielektrischen Körpers 2. Wie im Vergleich mit Fig. 1 zu erkennen ist, läßt sich durch diese Maßnahme eine deutlich kürzere Bauform der dielektrischen Antenne erzielen als bei der Verwendung eines homogenen dielektrischen Körpers 2. Auch ist der linsenförmig geformte Abstrahlabschnitt 5 deutlich weniger stark gewölbt, da die elektromagnetische Strahlung, die den linsenförmig geformten Abstrahlabschnitt von dem Speiseabschnitt her erreicht, schon durch die Verwendung verschiedener Dielektrika vorgerichtet ist, weshalb die Wölbung des linsenförmig geformten Abstrahlabschnittes 5 deutlich geringer ausfallen kann.

In Fig. 3 weist der dielektrische Körper 2 im Speiseabschnitt 4 eine speiseseitige Absorberschicht 13 zur Absorption reflektierter elektromagnetischer Strahlung auf, die im Bereich der Speiseöffnung 6 eine Aussparung aufweist. Die speiseseitige Absorberschicht 13 ist benachbart zur leitfähigen Hülle 3 angeordnet und zwar so, daß sie nicht im primär stark befeldeten Bereich des dielektrischen Körpers vorgesehen ist. Mit dem "primär stark befeldeten" Bereich ist jener Bereich gemeint, der von der elektromagnetischen Strahlung beaufschlagt ist, die ohne Reflexion die Abstrahlöffnung 7 erreicht. Wäre die Absorberschicht 13 auch in diesem Bereich angeordnet, würde das zu vermeidbaren Verlusten in der Abstrahlleistung führen. Durch die Absorberschicht 13 ist es möglich, reflektierte elektromagnetische Strahlung zu absorbieren, also letztlich in Wärme umzuwandeln. Dadurch wird gewährleistet, daß die von der dielektrischen Antenne 1 abgestrahlte elektromagnetische Strahlung und die von der dielektrischen Antenne 1 aufgenommene elektromagnetische Strahlung möglichst rein - ohne unbeabsichtigte Echos - die dielektrische Antenne 1 verläßt bzw. von der dielektrischen Antenne 1 aufgenommen wird.

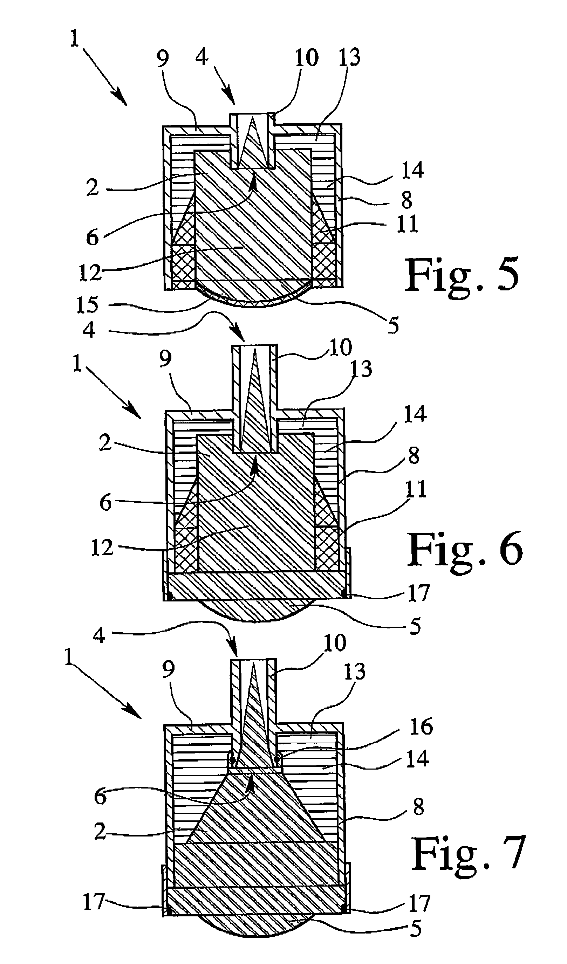

Bei der dielektrischen Antenne gemäß Fig. 5 weist der dielektrische Körper 2 in einem Randabschnitt benachbart zur leitfähigen Hülle 3 eine seitliche Absorberschicht 14 auf, die im Randabschnitt zur Seitenwand der leitfähigen Hülle 3 vorgesehen ist. Diese seitliche Absorberschicht 14 vermag auch reflektierte elektromagnetische Strahlung zu absorbieren, die nicht in den Abstrahlabschnitt 5 der dielektrischen Antenne fällt, sondern eher in den Bereich der Seitenwand 8. Die speiseseitige Absorberschicht 13 und die seitliche Absorberschicht 14 bilden einen zusammenhängenden Bereich in der dielektrischen Antenne 1. In den dargestellten Fällen ist die speiseseitige Absorberschicht 13 und die seitliche Absorberschicht 14 durch einen Kunststoff gebildet, in den inhärent leitfähige Stoffe eingelagert sind, vorliegend leitfähige Kohlenstoffasern. Die Leitfähigkeit bewirkt, daß das in die Absorberschichten 13, 14 eindringende elektromagnetische Feld aufgrund von Induktionsströmen und Kurzschlüssen zusammenbricht.

Zur weiteren Reduktion der zurückreflektierten elektromagnetischen Strahlung ist in Fig. 5 eine dielektrische Anpassungsschicht 15 auf dem linsenförmig geformten Abstrahlabschnitt 5 vorgesehen, die gemäß den einleitend beschriebenen Regeln zur Auslegung ihrer Dicke und zur Wahl ihrer Permittivität ausgelegt ist.

Die in Fig. 4 dargestellte dielektrische Antenne 1 weist einen linsenförmigen Abstrahlabschnitt 5 auf, der so ausgestaltet ist, daß die in den dielektrischen Körper 2 zurückreflektierte elektromagnetische Strahlung im wesentlichen auf die speiseseitige Absorberschicht 13 und die seitliche Absorberschicht 14 reflektiert wird, so daß der Anteil der Strahlung, der in die Speiseöffnung 6 zurückfällt sehr gering ist, weshalb die dargestellte dielektrische Antenne 1 sehr störungsarm ist.

In Fig 6. ist eine dielektrische Antenne 1 dargestellt, die im Bereich des Abstrahlabschnitts 5 eine Haltevorrichtung 17 zur Realisierung eines Hygieneanschlusses aufweist. Dieser Hygieneanschluß ist insbesondere im erforderlichen Maße Dicht gegen das Eindringen von Anhaftungen. Vorliegend ist der Hygieneanschluß durch eine Dichtung auf Basis eines O-Ring realisiert. Diese Verbindung gestattet es ferner, ein abstrahlseitiges Abschlußelement - hier in Form des linsenförmig geformten Abstrahlabschnitts 5 - auszutauschen.

Fig. 7 zeigt eine nicht erfindungsgemäße dielektrische Antenne 1, bei der der dielektrische Körper 2 mittels einer Fixierungsvorrichtung im Speiseabschnitt 4 bzw. an dem Hohlleiter 10 befestigt ist. Bei einer nicht dargestellten Variante ist dies durch eine Verschraubung gelöst, vorliegend durch einen O-Ring 16 der in den Umfang des Hohlleiters 10 eingelassen ist und mit einer entsprechenden Nut in dem dielektrischen Körper 2 in Eingriff steht bzw. in Eingriff bringbar ist.

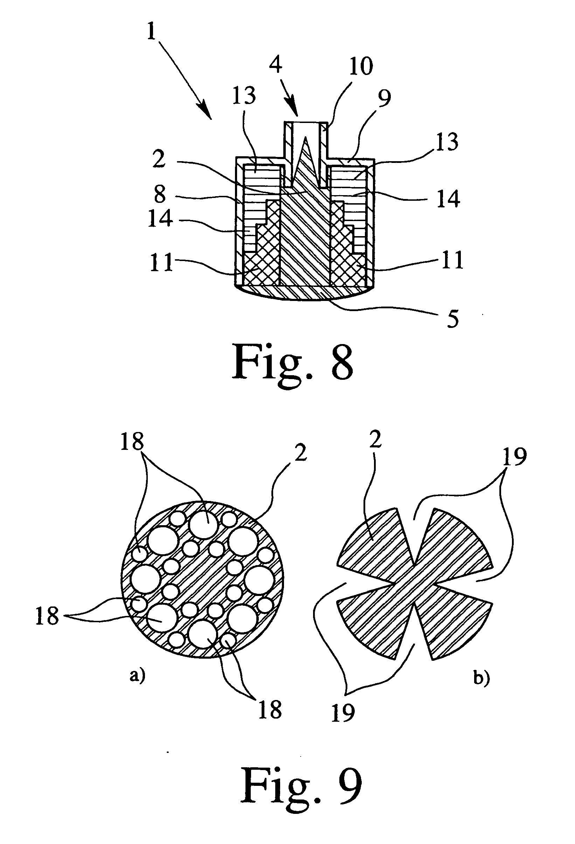

Fig. 8 illustriert, daß eine geeignete Anpassung der Geometrien des Randabschnitts 11 mit geringerer Permittivität und der seitlichen Absorberschicht 14 gestuft erfolgen kann, was in der Herstellung besonders einfach zu realisieren ist, womit die Herstellung konischer Passungen gemäß den Fig. 5 bis 7 vermieden wird.

Fig. 9 veranschaulicht, daß auch kontinuierliche Permittivitätsverläufe realisierbar sind, indem in dem dielektrischen Körper 2 eine quasi-kontinuierliche Hohlraumdichte realisiert ist. In dem in Fig. 9a dargestellten Ausführungsbeispiel ist dies durch Bohrungen 18 unterschiedlicher Durchmesser umgesetzt, die verschieden tief in dem dielektrischen Körper 2 umgesetzt sind. In Fig. 9b ist die Umsetzung durch keilförmige Ausnehmungen 19 in dem dielektrischen Körper 2 erfolgt.

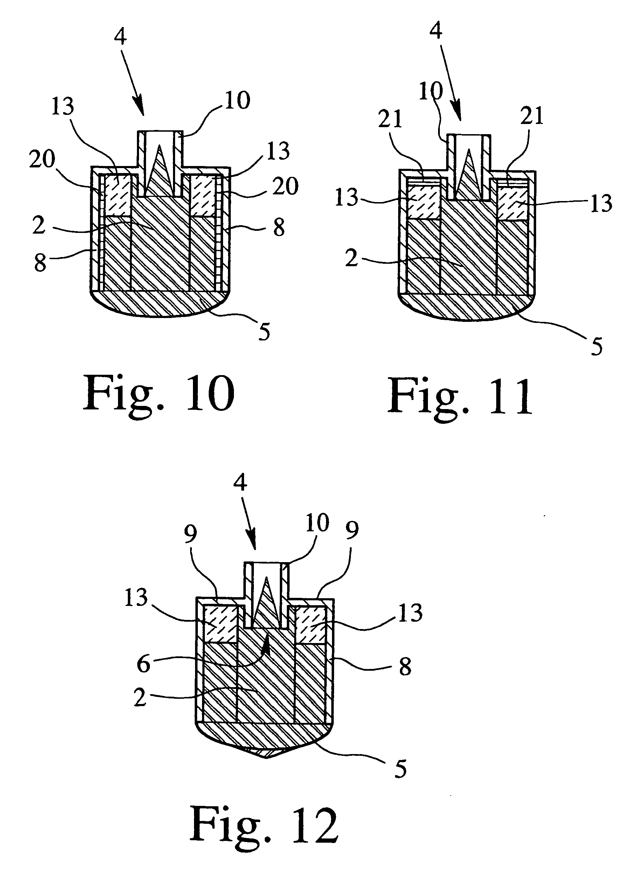

Die Fig. 10 und 11 zeigen die nicht unter die Erfindung fallende Realisierung von Kompensationsräumen 20, 21, die vorliegend mit elastischem Material gefüllt sind oder - in nicht dargestellten Ausführungsbeispielen - einfach nur Hohlräume sind. Jedenfalls dienen sie dem Ausgleich von insbesondere durch Temperatureinfluß bewirkter Materialausdehnung.

## Patentansprüche

1. Dielektrische Antenne mit einem dielektrischen Körper (2) und einer elektrisch leitfähigen Hülle (3), wobei der dielektrische Körper (2) an einem Speiseabschnitt (4) mit elektromagnetischer Strahlung beaufschlagbar ist und die elektromagnetische Strahlung von dem dielektrischen Körper (2) über einen linsenförmig geformten Abstrahlabschnitt (5) abstrahlbar ist, die leitfähige Hülle (3) den dielektrischen Körper (2) vom Speiseabschnitt (4) bis zum Abstrahlabschnitt (5) im wesentlichen umgibt und im Bereich des Speiseabschnitts (4) in der leitfähigen Hülle (3) eine Speiseöffnung (6) und im Bereich des Abstrahlabschnitts (5) in der leitfähigen Hülle (3) eine Abstrahlöffnung (7) vorgesehen ist, **dadurch gekennzeichnet, daß** der dielektrische Körper (2) im Bereich des Speiseabschnitts (4) den Querschnitt der Abstrahlöffnung (7) aufweist,
daß der dielektrische Körper (2) in einem Randabschnitt (11) benachbart zur leitfähigen Hülle (3), nämlich im Randabschnitt (1.1) zur Seitenwand (8) der leitfähigen Hülle (3), aus einem Dielektrikum besteht, das eine geringere Permittivität aufweist als die anderen Abschnitte des dielektrischen Körpers (2), nämlich eine geringere Permittivität aufweist als der Kernabschnitt (12) und der Abstrahlabschnitt (5) des dielektrischen Körpers (2).

2. Dielektrische Antenne nach Anspruch 1, **dadurch gekennzeichnet, daß** die leitfähige Hülle (3) topfartig ausgestaltet ist, eine zylindrische Seitenwand (8) und einen die Speiseöffnung (6) aufweisenden Boden (9) im Speiseabschnitt (4) der Antenne aufweist, wobei die Abstrahlöffnung (7) den Querschnitt der zylindrischen Seitenwand (8) - senkrecht zur Hauptabstrahlrichtung - aufweist.

3. Dielektrische Antenne nach Anspruch 1 oder 2, **dadurch gekennzeichnet, daß** der Speiseabschnitt (4) durch einen Hohlleiter (10) gebildet wird, der an die leitfähige Hülle (3) um die Speiseöffnung (6) angesetzt ist oder der in die leitfähige Hülle (3) in die Speiseöffnung (6) eingesetzt ist und vorzugsweise in den dielektrischen Körper (2) hineinragt.

4. Dielektrische Antenne nach einem der Ansprüche 1 bis 3, **dadurch gekennzeichnet, daß** der dielektrische Körper (2) im Speiseabschnitt (4) eine speiseseitige Absorberschicht (13) zur Absorption reflektierter elektromagnetischer Strahlung aufweist, die im Bereich der Speiseöffnung (6) eine Aussparung aufweist, wobei die speiseseitige Absorberschicht (13) insbesondere benachbart zur leitfähigen Hülle (3) und insbesondere nicht im primär stark befeldeten Bereich des dielektrischen Körpers (2) vorgesehen ist.

5. Dielektrische Antenne nach einem der Ansprüche 1 bis 4, **dadurch gekennzeichnet, daß** der dielektrische Körper (2) in einem Randabschnitt benachbart zur leitfähigen Hülle (3) eine seitliche Absorberschicht (14) aufweist, die insbesondere im Randabschnitt zur Seitenwand (8) der leitfähigen Hülle (3) vorgesehen ist, insbesondere nicht im primär stark befeldeten Bereich des dielektrischen Körpers (2) und vorzugsweise benachbart zu der speiseseitigen Absorberschicht (13) im Speiseabschnitt (4) des dielektrischen Körpers (2).

6. Dielektrische Antenne nach Anspruch 4 oder 5, **dadurch gekennzeichnet, daß** die speiseseitige Absorberschicht (13) und/oder die seitliche Absorberschicht (14) aus wenigstens einer elektrisch und/oder magnetisch aktiven Substanz besteht bzw. bestehen oder beinhaltet bzw. beinhalten, insbesondere aus einem Kunststoff besteht mit eingelagerten inhärent leitfähigen Stoffen wie Leitruß und/oder Kohlenstoffasern und/oder leitfähige Mikrofasern.

7. Dielektrische Antenne nach einem der Ansprüche 1 bis 6, **dadurch gekennzeichnet, daß** der linsenförmig geformte Abstrahlabschnitt (5) eine dielektrischen Anpassungsschicht (15) zur Vermeidung von Reflexionen aufweist.

8. Dielektrische Antenne nach einem der Ansprüche 4 bis 7, **dadurch gekennzeichnet, daß** der linsenförmige Abstrahlabschnitt (5) so ausgestaltet ist, daß die in den dielektrischen Körper (2) zurückreflektierte elektromagnetische Strahlung auf die speiseseitige Absorberschicht (13) und/oder die seitliche Absorberschicht (14) reflektiert wird.

9. Dielektrische Antenne nach einem der Ansprüche 1 bis 8, **dadurch gekennzeichnet, daß** im Bereich des Abstrahlabschnitts (5) eine Haltevorrichtung (17) zur Realisierung eines Hygieneanschlusses vorgesehen ist, insbesondere ein O-Ring, mit der ein abstrahlseitiges Abschlußelement austauschbar mit der dielektrischen Antenne verbindbar ist.

10. Dielektrische Antenne nach einem der Ansprüche 1 bis 9, **dadurch gekennzeichnet, daß** der dielektrische Körper (2) mittels einer Fixierungsvorrichtung im Speiseabschnitt (4) bzw. an dem Hohlleiter (10) befestigt ist, insbesondere durch Verschraubung, bevorzugt durch einen O-Ring (16) der in dem Umfang des Hohlleiters eingelassen ist und mit einer entsprechenden Nut in dem dielektrischen Körper in Eingriff steht bzw. in Eingriff bringbar ist.

## Claims

1. Dielectric antenna having a dielectric body (2) and an electrically conductive sheath (3), wherein the dielectric body (2) can be struck on a supply section (4) with electromagnetic radiation and the electromagnetic radiation can be emitted from the dielectric body (2) via a lens-shaped radiation section (5), the conductive sheath (3) essentially surrounds the dielectric body (2) from the supply section (4) to the radiation section (5) and a supply opening (6) is provided in the area of the supply section (4) in the conductive sheath (3) and a radiation opening (7) is provided in the area of the radiation section (5) in the conductive sheath (3)
**characterized in**
**that** in the area of the supply section (4), the dielectric body (2) essentially has the cross-section of the radiation opening (7), that the dielectric body (2) consists of a dielectric in a boundary section (11) adjacent to the conductive sheath (3), wherein the dielectric has a lower permittivity than the other sections of the dielectric body (2), namely has a lower permittivity than the core section (12) and the radiation section (5) of the dielectric body (2).

2. Dielectric antenna according to claim 1, **characterized in that** the conductive sheath (3) is designed like a pot, has a cylindrical sidewall (8) and a base (9) having the supply opening (6) in the supply section (4) of the antenna, wherein the radiation opening (7) essentially has the cross-section of the cylindrical sidewall (8) - perpendicular to the main radiation direction.

3. Dielectric antenna according to claim 1, **characterized in that** the supply section (4) is formed by a waveguide (10), which is attached to the conductive sheath (3) around the supply opening (6) or which is inserted in the supply opening (6) in the conductive sheath (3) and then preferably extends into the dielectric body (2).

4. Dielectric antenna according to any one of claims 1 to 3, **characterized in that** the dielectric body (2) has a supply-side absorber layer (13) in the supply section (4) for absorbing reflected electromagnetic radiation, which has a recess in the area of the supply opening (6), wherein, in particular, the supply-side absorber layer (13) is adjacent to the conductive sheath (3) and, in particular, is not provided in the primary strong field area of the dielectric body (2).

5. Dielectric antenna according to any one of claims 1 to 4, **characterized in that** the dielectric body (2) has a side absorber layer (14) in a boundary section adjacent to the conductive sheath (3), which is provided in the boundary section to the sidewall (8) of the conductive sheath (3), in particular is not provided in the primary strong field area of the dielectric body (2) and is preferably provided adjacent to the supply-side absorber layer (13) in the supply section (4) of the dielectric body (2).

6. Dielectric antenna according to claim 4 or 5, **characterized in that** the supply-side absorber layer (13) and/or the side absorber layer (14) consists of or includes at least one of electrically and/or magnetically active substance, in particular consists of plastic with embedded inherently conductive materials such as carbon black and/or carbon fibers and/or conductive microfibers.

7. Dielectric antenna according to any one of claims 1 to 6, **characterized in that** the lens-shaped radiation section (5) has a dielectric adjusting layer (15) for avoiding reflections.

8. Dielectric antenna according to any one of claims 4 to 7, **characterized in that** the lens-shaped radiation section (5) is formed so that the electromagnetic radiation reflected back into the dielectric body (2) is preferably reflected onto the supply-side absorber layer (13) and/or the side absorber layer (14).

9. Dielectric antenna according to any one of claims 1 to 8, **characterized in that** a fixture (17) is provided in the area of the radiation section (5) for implementing a hygienic connection, in particular an o-ring, with which a radiation-side terminating element can be exchangeably connected to the dielectric antenna.

10. Dielectric antenna according to any one of claims 1 to 9, **characterized in that** the dielectric body (2) is affixed by means of at least one fixing device in the supply section (4) or on the waveguide (10), in particular using a screw connection, preferably with an o-ring (16) that is embedded in the circumference of the waveguide and is engaged/can be engaged with a corresponding groove in the dielectric body.

## Revendications

1. Antenne diélectrique dotée d'un corps diélectrique (2) et d'une enveloppe électriquement conductrice (3), le corps diélectrique (2) pouvant être alimenté en rayonnement électromagnétique au niveau d'une section d'alimentation (4) et le rayonnement électromagnétique pouvant rayonner hors du corps diélectrique (2) par le biais d'une section de rayonnement (5) en forme de lentille, l'enveloppe conductrice (3) entourant le corps diélectrique (2) pour l'essentiel de la section d'alimentation (4) jusqu'à la section de rayonnement (5) et une ouverture d'alimentation (6) étant prévue dans la région de la section d'alimentation (4) placée dans l'enveloppe conductrice (3) et une ouverture de rayonnement (7) étant prévue dans la région de la section de rayonnement (5) placée dans l'enveloppe conductrice (3), **caractérisée en ce que** le corps électrique (2) comporte la section transversale de l'ouverture de rayonnement (7) dans la région de la section d'alimentation (4), que le corps diélectrique (2) placé dans une section de bordure (11) située à côté de l'enveloppe conductrice (3), notamment dans la section de bordure (11) par rapport à la paroi latérale (8) de l'enveloppe conductrice (3), se compose d'un diélectrique présentant une permittivité inférieure aux autres sections du corps diélectrique (2), notamment une permittivité inférieure à la section centrale (12) et à la section de rayonnement (5) du corps diélectrique (2).

2. Antenne diélectrique selon la revendication 1, **caractérisée en ce que** l'enveloppe conductrice (3) prend une forme de pot, comporte une paroi latérale cylindrique (8) et un fond (9) comportant l'ouverture d'alimentation (6) dans la section d'alimentation (4) de l'antenne, l'ouverture de rayonnement (7) comportant la section transversale de la paroi latérale cylindrique (8) - perpendiculaire à la direction de rayonnement principale.

3. Antenne diélectrique selon la revendication 1 ou 2, **caractérisée en ce que** la section d'alimentation (4) est formée par un conducteur creux (10) placé au niveau de l'enveloppe conductrice (3) entourant l'ouverture d'alimentation (6) ou est insérée dans l'enveloppe conductrice (3), dans l'ouverture d'alimentation (6) et rentrant de préférence dans le corps diélectrique (2).

4. Antenne diélectrique selon l'une quelconque des revendications 1 à 3, **caractérisée en ce que** le corps diélectrique (2) comporte une couche absorbante (13) placée du côté d'alimentation dans la section d'alimentation (4) permettant l'absorption de rayonnement électromagnétique réfléchi comportant un évidement dans la région de l'ouverture d'alimentation (6), la couche absorbante (13) placée du côté d'alimentation étant notamment prévue à côté de l'enveloppe conductrice (3) et notamment ailleurs que dans la région à forte composante de champ primaire du corps diélectrique (2).

5. Antenne diélectrique selon l'une quelconque des revendications 1 à 4, **caractérisée en ce que** le corps diélectrique (2) comporte une couche absorbante (14) latérale prévue dans une section de bordure placée à côté de l'enveloppe conductrice (3), notamment dans la section de bordure par rapport à la paroi latérale (8) de l'enveloppe conductrice (3), notamment ailleurs que dans la région à forte composante de champ primaire du corps diélectrique (2) et de préférence à côté de la couche absorbante (13) placée du côté d'alimentation dans la section d'alimentation (4) du corps diélectrique (2).

6. Antenne diélectrique selon la revendication 4 ou 5, **caractérisée en ce que** la couche absorbante (13) placée du côté d'alimentation et/ou la couche absorbante (14) latérale se compose et/ou se composent d'au moins une substance active sur le plan électrique et/ou magnétique ou contient et/ou contiennent ladite substance, notamment se compose d'une matière plastique avec des matières à conductivité inhérente encastrées telles que le noir de fumée conducteur et/ou les fibres de carbone et/ou les microfibres conductrices.

7. Antenne diélectrique selon l'une quelconque des revendications 1 à 6, **caractérisée en ce que** la section de rayonnement (5) en forme de lentille comporte une couche d'adaptation (15) diélectrique permettant d'éviter les réflexions.

8. Antenne diélectrique selon l'une quelconque des revendications 4 à 7, **caractérisée en ce que** la section de rayonnement (5) en forme de lentille est conçue de telle sorte que le rayonnement électromagnétique réfléchi dans le corps diélectrique (2) est réfléchi sur la couche absorbante (13) placée du côté d'alimentation et/ou sur la couche absorbante (14) latérale.

9. Antenne diélectrique selon l'une quelconque des revendications 1 à 8, **caractérisée en ce qu'**un dispositif de maintien (17) est prévu dans la région de la section de rayonnement (5) pour réaliser un raccord hygiénique, notamment un joint torique à l'aide duquel un élément terminal situé du côté du rayonnement peut être relié de façon à pouvoir être remplacé par l'antenne diélectrique.

10. Antenne diélectrique selon l'une quelconque des revendications 1 à 9, **caractérisée en ce que** le corps diélectrique (2) est fixé dans la section d'alimentation (4) et/ou au niveau du conducteur creux (10) à l'aide d'un dispositif de fixation, notamment par un raccord vissé, de façon préférée par un joint torique (16) rentré dans la circonférence du conducteur creux et en prise et/ou pouvant être amené en prise avec une rainure correspondante prévue dans le corps diélectrique.
